# EUROPEAN PATENT SPECIFICATION

(11) **EP 4 452 685 B1**
(45) Date of publication and mention of the grant of the patent: **25.11.2026**
(21) Application number: 22844283.6
(22) Date of filing: 20.12.2022
(51) Int. Cl.: B60L 7/10

(54) **SYSTEM FOR MANAGING THE ELECTRIC POWER FLOW IN BATTERY PACKS OF AN ELECTRIC OR HYBRID VEHICLE**
SYSTEM ZUR STEUERUNG DES ELEKTRISCHEN LEISTUNGSFLUSSES IN BATTERIEPAKETEN EINES ELEKTRO- ODER HYBRIDFAHRZEUGS
SYSTÈME DE GESTION DU FLUX D'ÉNERGIE ÉLECTRIQUE DANS LES BLOCS DE BATTERIES D'UN VÉHICULE ÉLECTRIQUE OU HYBRIDE

(30) Priority: 24.12.2021 IT 202100032618
(43) Date of publication of application: 30.10.2024
(73) Proprietor: Brembo S.p.A., 24035 Curno (Bergamo) (IT)
(72) Inventor: CANTONI, Carlo, 24035 Curno, BERGAMO (IT); ARIENTI, Roberto, 24035 Curno, BERGAMO (IT); URSO, Giacomo, 24035 Curno, BERGAMO (IT)
(74) Representative: Mozzi, Matteo
(86) International application number: PCT/IB2022/062533
(87) International publication number: WO 2023/119150

(56) References cited:
- WO-A1-2018/078560
- CN-A- 109 247 055
- US-A1- 2002 024 307
- US-A1- 2015 325 896
- US-A1- 2016 052 417
- US-A1- 2021 211 083

## Description

### . Field of the invention

**.** The present invention relates to a system for managing the electric power flow in battery packs of an electric or hybrid vehicle.

### . Background art

**.** The current architecture of an electric or hybrid vehicle uses high-load batteries, i.e., consisting of energy cells, capable of receiving large amounts of energy in order to maximize the mileage of the vehicle.

**.** In this configuration, a compromise is necessarily reached in the braking regenerating phase, i.e.:
- on the one hand, the load (and therefore, the weight) of the high-load battery can be increased, beyond what is strictly required to complete the mission, or;
- on the other hand, the power peak in the braking regenerating phase can be limited by having the dissipative brake intervene alongside the regenerating brake, in this case dispersing into heat part of the otherwise recoverable energy.

**.** In the current architecture therefore, the employment of high-load batteries for recovering braking energy allows storing large amounts of energy but dictates strong design limits, as described above.

**.** As a result, the braking power peaks are necessarily dissipated using the dissipative brake, unless the high-energy batteries are excessively oversized

**.** In light of the above, the need is currently felt to provide an architecture for managing the electric power flow in battery packs of an electric or hybrid vehicle which allows maximizing the recovery of braking power peaks. US 2016/052417 A1 discloses a control system that monitors power supply from an energy storage system to a DC bus of a vehicle propulsion system. US 2015/325896 A1 describes a fuel cell system comprising a fuel cell and a secondary battery, which is adapted to reduce the workload applied to the secondary battery.
US 2002/024307 A1 describes an electric vehicle comprising two energy storage units, wherein the first unit is designed to accomplish the needs from regular base loads, whereas the second one serves at absorbing short-term peak requests.

### . Summary of the invention

It is the object of the present invention to devise and provide a system for managing the electric power flow in battery packs of an electric or hybrid vehicle which allows obviating the above-described limits, through the use of a hybrid battery-pack architecture comprising high-energy cells and high-power cells, and through a power management unit distinct from and directly connected to an electronic control unit of the vehicle. The power management unit is configured to receive, directly from at least one electric motor, information representative of electric power regenerated by the electric motor, and to control the electric power flows entering and leaving the high-energy and high-power battery packs, so as to maximize recovery of braking power without oversizing the battery packs.

**.** Such an object is achieved by a system according to claim 1.

**.** Further advantageous embodiments are the subject of the dependent claims.

### . Brief description of the drawings

**.** Further features and advantages of the system according to the invention will become apparent from the following description of preferred exemplary embodiments thereof, given by way of non-limiting indication, with reference to the accompanying drawings, in which:
- Figures 1-3 each show a block diagram of a system for managing the electric power flow in battery packs of an electric or hybrid vehicle according to an embodiment of the present invention;
- Figure 4 shows a functional block diagram of a functional block of a system for managing the electric power flow in battery packs of an electric or hybrid vehicle according to an embodiment of the present invention;
- Figure 5 shows a functional block diagram of a further functional block of a system for managing the electric power flow in battery packs of an electric or hybrid vehicle according to an embodiment of the present invention;
- Figure 6 shows a functional block diagram of a further functional block of a system for managing the electric power flow in battery packs of an electric or hybrid vehicle according to an embodiment of the present invention, and
- Figure 7 shows a functional block diagram of a system for managing the electric power flow in battery packs of an electric or hybrid vehicle according to an embodiment of the present invention.

**.** It is worth noting that equal or similar elements in the figures will be indicated by the same numeric or alphanumeric references.

### . Description of some preferred embodiments

**.** With reference now to the aforesaid figures, reference numeral 100 indicates as a whole a system for managing the electric power flow in battery packs of an electric or hybrid vehicle, hereinafter also simply control system or simply system, according to the present invention.

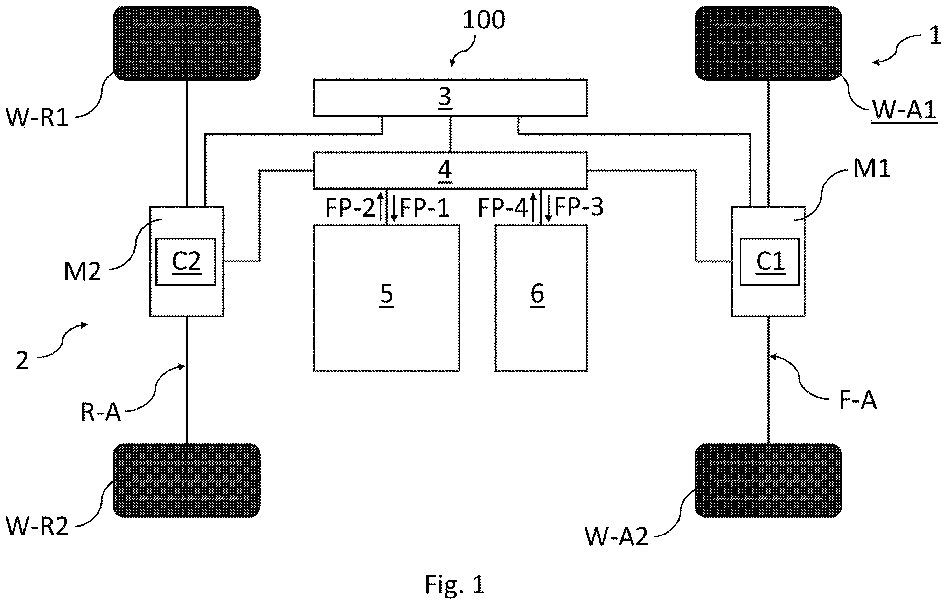

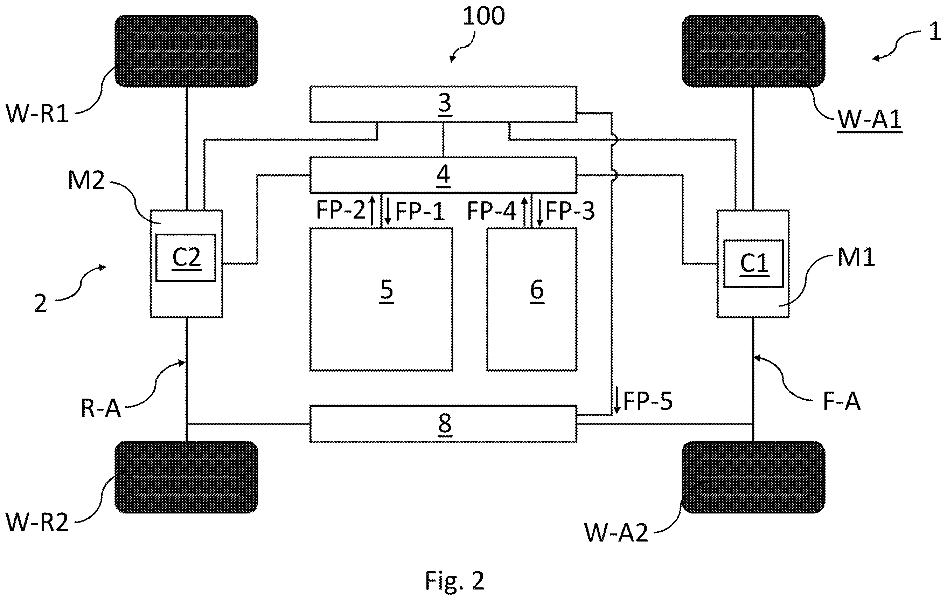

**.** For the purposes of the present description, "vehicle" means any vehicle or motorcycle, also of commercial type or of the racing type, also competitive racing (motorsport), having one, two, three, four, or more wheels, shown only diagrammatically in Figures 1-3 and indicated by reference numeral 1.

**.** Furthermore, "braking/driving system" means the whole of all the (mechanical and/or hydraulic and/or electric or electronic) components which contribute to generating the service braking of a vehicle or to generating the parking-braking of a vehicle and the driving of the vehicle.

**.** With reference to Figures 1, 2 and 3, the vehicle 1 comprises at least one first axle F-A to which at least one first wheel W-A1 is connected.

**.** The at least one first axle F-A is, for example, a front axle of the vehicle 1, and the first wheel W-A1 is, for example, a front wheel.

**.** According to an embodiment, in combination with the preceding one and shown in Figures 1, 2 and 3, the vehicle 1 comprises at least one second wheel W-A2 connected to the first axle F-A.

**.** In this embodiment, the at least one first axle F-A is, for example, a front axle of the vehicle 1, the first wheel W-A1 is, for example, the left front wheel and the at least one second wheel W-A2 is the right front wheel.

**.** In an embodiment, in combination with any of the preceding ones and shown in Figures 1, 2 and 3, the vehicle 1 comprises at least one second axle R-A to which at least one further first wheel W-R1 is connected.

**.** In this embodiment, if the at least one first axle F-A is, for example, the front axle of the vehicle 1, the at least one second axle R-A is a rear axle of the vehicle 1, and the at least one further first wheel W-R1 is, for example, a rear wheel.

**.** According to an embodiment, in combination with the preceding one and shown in Figures 1, 2 and 3, the vehicle 1 comprises at least one further second wheel W-R2 connected to the at least one second axle R-A.

**.** In this embodiment, if the at least one second axle R-A is the rear axle of the vehicle 1, the at least one further first wheel W-R1 is, for example, the left rear wheel while the at least one second rear wheel W-R2 is, for example, the right rear wheel.

**.** Returning in general to Figures 1, 2 and 3, the vehicle 1 further comprises a braking/driving system 2.

**.** The braking/driving system 2 further comprises at least one first electric motor M1 operatively connected to the at least one first axle F-A.

**.** The at least one first electric motor M1 comprises a respective first electric motor control module C1.

**.** The first electric motor control module C1 is configured to control the at least one first electric motor M1 to provide a regenerative braking or driving torque required by the system 100 based on a command received.

**.** The first electric motor control module C1 is, for example, a specially configured hardware module or a software logic present in a main hardware module of the braking/driving system 2 or more generally, in a hardware module of the vehicle 1.

**.** In an embodiment, in combination with the preceding one and in combination with any of the preceding ones where the vehicle 1 comprises the at least one second axle R-A, the braking/driving system 2 further comprises at least one second electric motor M2 operatively connected to the at least one second axle R-A (Figures 1-3).

**.** The at least one second electric motor M2 comprises a respective second electric motor control module C2.

**.** The second electric motor control module C2 is configured to control the at least one second electric motor M2 to provide a regenerative braking or driving torque required by the system 100 based on a command received.

**.** The second electric motor control module C2 is, for example, a specially configured hardware module or a software logic present in a main hardware module of the braking/driving system 2 or more generally, in a hardware module of the vehicle 1.

**.** According to a further embodiment (not shown in the figures), alternatively to that in which the braking/driving system 2 of the vehicle 1 comprises the at least one first electric motor M1 operatively connected to the at least one first axle F-A, the braking/driving system 2 comprises at least one first electric motor M1 operatively connected to the first wheel W-A1 (front wheel).

**.** In a further embodiment (not shown in the figures) and in combination with the preceding one, the vehicle 1 comprises a further first electric motor operatively connected to the second wheel W-A2.

**.** In this embodiment, the at least one first wheel W-A1 and the second wheel W-A2 are connected to the at least one first axle F-A, for example, as left front wheel (W-A1) and right front wheel (W-A2).

**.** Also in this embodiment, the further first electric motor is adapted to provide a regenerative braking or driving torque required by the system 100 based on a command received.

**.** In an embodiment (not shown in the figures), alternatively to that in which the braking/driving system 2 of the vehicle 1 comprises the at least one second electric motor M2 operatively connected to the at least one second axle R-A, the braking/driving system 2 comprises at least one second electric motor operatively connected to the further first wheel W-R1 (rear wheel).

**.** In a further embodiment (not shown in the figures) and in combination with the preceding one, the vehicle 1 comprises a further second electric motor operatively connected to the further second wheel W-R2.

**.** In this embodiment, the further first wheel W-R1 and the further second wheel W-R2 are connected to the at least one second axle R-A, for example, as left rear wheel (W-R1) and right rear wheel (W-R2).

**.** Also in this embodiment, the further second electric motor is adapted to provide a regenerative braking or driving torque required by the system 100 based on a command received.

**.** Returning in general to Figures 1, 2 and 3, the system 100 comprises an electronic control unit 3 of the vehicle 1 (or vehicle control unit), VCU, which will be described in detail below with reference to other figures as well.

**.** The electronic control unit 3 is, for example, a specially configured hardware module or a software logic present in a main hardware module of the braking/driving system 2 or more generally, in a hardware module of the vehicle 1.

**.** The electronic control unit 3 is configured to be operatively connected to at least one first electric motor M1 of the braking/driving system 2 of the vehicle 1, operatively connected to the at least one first axle F-A of the vehicle 1.

**.** The electronic control unit 3 is configured to control the at least one first electric motor M1, therefore the first front axle F-A.

**.** In greater detail, in an embodiment (shown in Figures 1-3), the electronic control unit 3 is directly connectable to the at least one first electric motor M1.

**.** In an embodiment, in combination with the preceding one or with those in which there is the at least one second electric motor 2 operatively connected to the at least one second axle R-A, the electronic control unit 3 is further configured to be operatively connected to the at least one second electric motor M2, of the braking/driving system 2 of the vehicle 1, operatively connected to the second rear axle R-A.

**.** In this embodiment, the electronic control unit 3 is further configured to control the at least one second electric motor M2, therefore the second rear axle R-A.

**.** In greater detail, in an embodiment (shown in Figures 1-4), the electronic control unit 3 is further directly connectable to the at least one second electric motor M2.

**.** With reference again in general to Figures 1, 2 and 3, the system 100 further comprises a power management unit 4, or PMS, which will be described in detail below.

. The power management unit 4 is distinct from and directly operatively connected to the electronic control unit 3. In particular, the power management unit 4 and the electronic control unit 3 are separate functional units of the system 100, which exchange information for controlling the regenerative braking/driving torque and the electric power flows entering and leaving the battery packs.

**.** Moreover, the power management unit 4 is configured to be operatively connected to the at least one first electric motor M1.

. The system 100 further comprises a first battery pack 5 of high-energy cells (hereinafter also simply first battery pack 5) operatively connected to the power management unit 4.

**.** The first battery pack 5 of high-energy cells is configured to store electricity during a braking phase of the vehicle 1, even in large amounts, to be supplied to the at least one first electric motor M1 during a driving phase of the vehicle 1.

**.** The system 100 further comprises a second battery pack 6 of high-power cells (hereinafter also simply second battery pack 6) operatively connected to the power management unit 4.

**.** In greater detail, the second battery pack 6 of high-power cells is configured to store electricity from electric power peaks of regenerative braking.

**.** According to a possible, non-limiting sizing strategy, the second battery pack 6 of high-power cells comprises a plurality of power cells sized considering the regenerative braking phase of the vehicle 1.

**.** According to a possible, non-limiting sizing strategy, the second battery pack 6 of high-power cells is sized to absorb a maximum electric current equal to the maximum regenerated electric current minus the maximum electric current absorbable by the first battery pack 5 of high-energy cells.

**.** The electricity to be stored in the second battery pack 6 of high-power cells can be delivered to the at least one first electric motor M1 to support the driving phase, or is transferable to the first battery pack 5 of high-energy cells, respecting the maximum electric current limit which the first battery pack 5 of high-energy cells is capable of absorbing.

**.**

**.** In an embodiment, in combination with the preceding one or with those in which there is the at least one second electric motor 2 operatively connected to the at least one second axle R-A, the power management unit 4 is configured to be operatively connected to the at least one second electric motor M2.

**.** In this embodiment, the first battery pack 5 of high-energy cells is configured to store electricity during a braking phase of the vehicle 1, even in large amounts, to be supplied to the at least one first electric motor M1 and/or the at least one second electric motor M2 during a driving phase of the vehicle 1.

**.** According to this embodiment, the electricity to be stored in the second battery pack 6 of high-power cells during the braking phase of the vehicle 1 can be delivered to the at least one first electric motor M1 and/or to the at least one second electric motor M2 to support the driving phase, or is transferable to the first battery pack 5 of high-energy cells, respecting the maximum electric current limit which the first battery pack 5 of high-energy cells is capable of absorbing.

**.** According to an embodiment and according to a possible non-limiting sizing strategy, in combination with any one of those described above, the first battery pack 5 of high-energy cells comprises a plurality of energy cells sized considering the driving phase of the vehicle 1, in which the at least one first electric motor M1 (and the at least one second electric motor M2, when present), actually operates as a motor, developing a driving torque which allows the vehicle 1 to advance.

**.** It should be noted that thereby, the first battery pack 5 of high-energy cells, by way of example, can be sized to sustain the electric currents required during the driving phase, in the condition of minimum operating voltage, i.e., that condition in which the electric currents are higher, and therefore are dimensioning, power being equal.

**.** According to a further embodiment, as an alternative to the preceding one, the first battery pack 5 of high-energy cells comprises a plurality of fuel cells.

**.** The plurality of fuel cells is an electrochemical device which allows obtaining electricity through a chemical process involving hydrogen and oxygen, without any combustion process occurring. In fuel cells, the conversion of chemical energy into electricity occurs by combining a negative electrode, or anode (hydrogen), with a positive one, or cathode (oxygen), put into contact with a suitable ion conduction means, or electrolyte.

**.** Returning in general to Figures 1, 2 and 3, as it will be reiterated below, the power management unit 4 is configured to provide instructions for conveying flows of electric power entering in and leaving the first battery pack 5 of high-energy cells and the second battery pack 6 of high-power cells and between the first battery pack 5 of high-energy cells and the second battery pack 6 of high-power cells based on a condition of correct operation of the first battery pack 5 of high-energy cells and the second battery pack 6 of high-power cells.

**.** "Condition of correct operation" of the first battery pack 5 of high-energy cells and the second battery pack 6 of high-power cells means the "state of health" of the first battery pack 5 of high-energy cells and the second battery pack 6 of high-power cells, i.e., the state of operating parameters of the first battery pack 5 of high-energy cells and the second battery pack 6 of high-power cells, such as for example the respective state of electric charge, the respective state of voltage, the respective operating temperature, and so on.

. The power management unit 4 is, for example, a hardware module configured separately from the electronic control unit 3, or a dedicated control logic implemented in a hardware module of the vehicle 1, provided that the power management unit 4 remains functionally distinct from and directly connected to the electronic control unit 3.

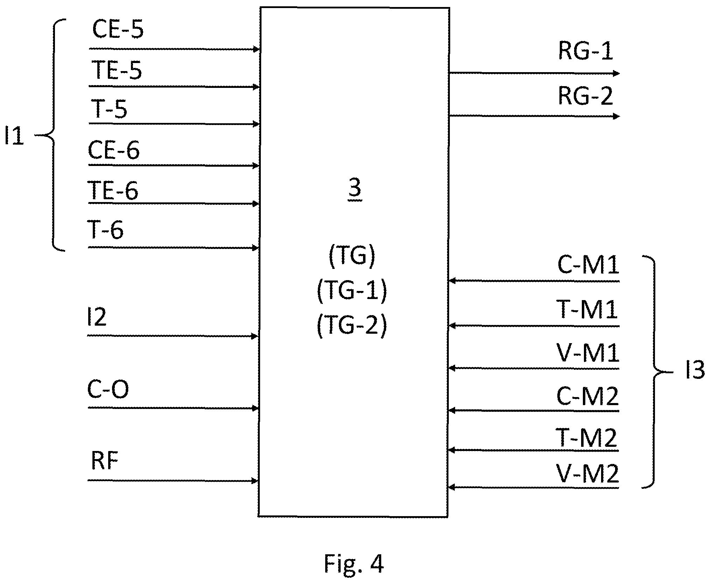

**.** From a functional viewpoint, with reference now also to Figure 4, the electronic control unit 3 is configured to receive a braking or driving request RF.

**.** The braking or driving request RF can be imparted by a driver P1 by means of one or more pedals of the vehicle 1 (for example, the brake pedal for a braking request or the accelerator pedal for a driving request) or in an automatic manner P2, for example, by a vehicle driver assistance software logic, an automatic autonomous driving/braking logic, and so on.

**.** A braking request is preferably provided to the electronic control unit 3 following the processing carried out by a stroke/pressure sensor of a brake pump (not shown in the figures) of the braking/driving system 2.

**.** A driving request is preferably provided to the electronic control unit 3 following the processing, for example, carried out by a stroke sensor (not shown in the figures) of the vehicle 1.

**.** In an embodiment, in combination with the preceding one, the electronic control unit 3 can be configured to receive at least one piece of information C-O representative of an operating condition of the vehicle 1.

**.** Information representative of an operating condition of the vehicle 1 means the set of one or more operating parameters of the vehicle 1 such as for example speed, acceleration and/or deceleration, and so on.

**.** In this regard, the at least one piece of information C-O representative of an operating condition of the vehicle 1 can comprise, for example, one or more of:
- actual speed of the vehicle 1;
- acceleration of the vehicle 1;
- deceleration of the vehicle 1.

**.** The at least one piece of information representative of an operating condition of the vehicle 1 can be provided by one or more sensors distributed in the vehicle 1 and/or determined by the electronic control unit 3.

**.** Returning in general to the electronic control unit 3, the electronic control unit 3 is further configured to receive first input information I1 representative of a condition of correct operation ("state of health") of the first battery pack 5 of high-energy cells and the second battery pack 6 of high-power cells.

**.** In this regard, the first input information I1 can comprise, for example, one or more of:
- state of electric charge CE-5 of the first battery pack 5 of high-energy cells;
- voltage value TE-5 of the first battery pack 5 of high-energy cells;
- operating temperature T-5 of the first battery pack 5 of high-energy cells;
- state of electric charge CE-6 of the second battery pack 6 of high-power cells;
- voltage value TE-6 of the second battery pack 6 of high-power cells;
- operating temperature T-6 of the second battery pack 6 of high-power cells.

**.** The first input information I1 is also provided to the electronic control unit 3 by the power management unit 4.

. The electronic control unit 3 is further configured to receive at least one second input information I2 representative of an electric power regenerated inside the system 100.

. The at least one second input information I2 is provided by the power management unit 4, which is distinct from and directly connected to the electronic control unit 3

**.** The electronic control unit 3 is further configured to receive third input information I3 representative of a regenerative braking or driving phase carried out by the system 100 on the braking/driving system 2.

**.** By way of example, the third input information I3 comprises at least one or more of:
- actual value of regenerative braking or driving torque C-M1 generated by the at least one first electric motor M1;
- actual temperature value T-M1 of the at least one first electric motor M1;
- rotation speed V-M1 of the at least one first electric motor M1.

**.** The third input information I3 can be provided by respective sensors distributed in the braking/driving system 2 and/or are determined by the electronic control unit 3.

**.** The electronic control unit 3 is configured to determine a target braking or driving value TG to be imparted to the vehicle 1, based on said braking request RF.

**.** In an embodiment, in combination with the preceding one and with that in which the electronic control unit 3 receives the at least one piece of information C-O representative of an operating condition of the vehicle 1, the electronic control unit 3 is configured to determine the target braking or driving value TG to be imparted to the vehicle 1 based on said braking request RF and the at least one piece of information C-O representative of an operating condition of the vehicle 1.

**.** In general, the determined target braking or driving value TG to be imparted to the vehicle 1 comprises at least one first regenerative braking or driving torque target RG-1 to be imparted to the at least one first axle F-A.

**.** The electronic control unit 3 is configured to define the at least one first regenerative braking or driving torque target RG-1 to be imparted to the at least one first electric motor M1 operatively connected to the at least one first axle F-A of the vehicle 1 based on said first input information I1, the at least one second input information I2, and said third input information I3.

**.** The target braking or driving value TG to be imparted to the at least one first axle F-A comprises at least one first regenerative braking or driving torque target RG-1.

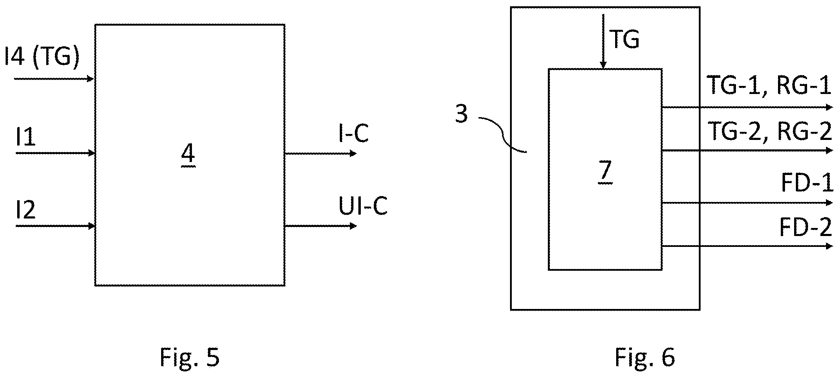

**.** From an operating viewpoint, as shown in Figure 5, the power management unit 4 is configured to receive a further input information I4 representative of an electric power regenerated by the at least one first electric motor M1.

**.** The further information I4 representative of an electric power regenerated by the at least one first electric motor M1 allows the power management unit 4 to correctly convey the flows of electric power entering in and leaving the first battery pack 5 of high-energy cells and the second battery pack 6 of high-power cells, and between the first battery pack 5 of high-energy cells and to the second battery pack 6 of high-power cells.

**.** In this regard, the power management unit 4 is configured to provide instructions I-C for conveying a first electric power flow FP-1 entering in the first battery pack 5 of high-energy cells, a second electric power flow FP-2 leaving the first battery pack 5 of high-energy cells, a third electric power flow FP-3 entering in the second battery pack 6 of high-power cells, and a fourth electric power flow FP-4 leaving the second battery pack 6 of high-power cells, and control the first electric power flow FP-1, the second electric power flow FP-2, the third electric power flow FP-3, and the fourth electric power flow FP-4 based on said first input information I1, the at least one second input information I2, said third input information I3, and the further input information I4.

**.** It should be noted that the first electric power flow FP-1 and the second electric power flow FP-2 are conveyed on a same physical path, while the third electric power flow FP-3 and the fourth electric power flow FP-4 are conveyed on a same physical path.

**.** The conveying instructions I-C are information generated as a function of the first input information I1 representative of a condition of correct operation ("state of health") of the first battery pack 5 of high-energy cells and the second battery pack 6 of high-power cells.

**.** In greater detail, the power management unit 4 is configured to correctly deliver electricity to the first battery pack 5 of high-energy cells and/or to the second battery pack 6 of high-power cells during a regenerative braking phase of the vehicle 1 and/or during a driving phase.

**.** Moreover, the power management unit 4 is configured to transfer electricity from the second battery pack 6 of high-power cells to the first battery pack 5 of high-energy cells or transfer electricity directly to the at least one first electric motor M1 and to the at least one second electric motor M2 during the driving phase of the vehicle 1.

**.** Thereby, the second battery pack 6 of high-power cells advantageously supports the first battery pack 5 of high-energy cells during the driving phase.

**.** In an embodiment, in combination with the preceding ones, the electronic control unit 3 is configured to receive the further input information I4 from the power management unit 4.

**.** In this embodiment, based on the further information I4, the electronic control unit 3 is configured to establish the extent of the regeneration, i.e., the extent of the regenerative braking or driving torque imparted to the at least one first electric motor M1 operatively connected to the at least one first axle F-A of the vehicle 1.

**.** In an embodiment, in combination with any of the preceding ones and in which the vehicle 1 comprises the at least one second axle R-A and the braking/driving system 2 of the vehicle 1 comprises the at least one second electric motor M2, the third input information I3 representative of a regenerative braking or driving phase carried out by the system 100 on the braking/driving system 2 further comprises, for example, one or more of:
- actual value of regenerative braking or driving torque C-M2 generated by the at least one second electric motor M2;
- actual temperature value T-M2 of the at least one second electric motor M2;
- rotation speed V-M2 of the at least one second electric motor M2.

**.** Moreover, in this embodiment, the further input information I4 which can be received by the power management unit 4 and possibly also by the electronic control unit 3 is representative of the electric power regenerated by the at least one first electric motor M1 and of an electric power regenerated by the at least one second motor M2.

**.** In this embodiment, the electronic control unit 3 is configured to divide the determined target braking or driving value TG into a first braking or driving component TG-1 to impart to the at least one first axle F-A (for example, the front axle) and into a second braking or driving component TG-2 to be imparted to the at least one second axle R-A (for example, the rear axle) based on said first input information I1, the at least one second input information I2 and said third input information I3.

**.** The first braking or driving component TG-1 to be imparted to the at least one first axle F-A comprises the at least one first regenerative braking or driving torque target RG-1.

**.** The second braking or driving component TG-2 to be imparted to the at least one second axle R-A comprises the at least one second regenerative braking or driving torque target RG-2.

**.** In this embodiment, the electronic control unit 3 is configured to provide the first braking or driving torque component TG-1 to the at least one first electric motor M1 operatively connected to the at least one first axle F-A and the second braking or driving torque component TG-2 to the at least one second electric motor M2 operatively connected to the second axle R-A.

**.** In an embodiment, in combination with the preceding one and in which the electronic control unit 3 is configured to receive the further input information I4 from the power management unit 4, based on the further information I4, the electronic control unit 3 is configured to establish the extent of the regeneration, i.e., the extent of the regenerative braking or driving torque imparted to the at least one first electric motor M1 operatively connected to the at least one first axle F-A of the vehicle 1 and the extent of the regenerative braking or driving torque imparted to the at least one second electric motor M2 operatively connected to the at least one second axle R-A of the vehicle 1.

**.** According to an embodiment, shown in Figure 6, the electronic control unit 3 comprises a first braking or driving torque division management sub-module 7.

**.** In the more general embodiment, in which the vehicle 1 comprises the at least one first axle and the braking/driving system 2 of the vehicle 1 comprises the at least one first electric motor M1, the first braking or driving torque division management sub-module 7 is configured to define the at least one first regenerative braking or driving torque target RG-1 from the target braking or driving value TG to be imparted to the at least one first axle F-A.

**.** In an embodiment, in combination with the preceding one and in the event the vehicle 1 comprises the at least one second axle R-A and the braking/driving system 2 of the vehicle 1 comprises the at least one second electric motor M2, the first braking or driving torque division management sub-module 7 is configured to divide the target braking or driving value TG into the first braking or driving component TG-1 to be assigned to the at least one first axle F-A and into the second braking or driving component TG-2 to be assigned to the at least one second axle R-A.

**.** In this embodiment, the first braking or driving torque division management sub-module 7 is further configured to define the at least one first regenerative braking or driving torque target RG-1 from the first braking or driving component TG-1 to be imparted to the at least one first axle F-A (for example, the front axle).

**.** Moreover, the first braking or driving torque division management sub-module 7 is configured to define the at least one second regenerative braking or driving torque target RG-2 from the second braking or driving component TG-2 to be imparted to the at least one second axle R-A (for example, the rear axle).

**.** In an embodiment, in combination with any one of those described above, the system 100 further comprises a dissipative braking torque actuation module 8 operatively connected to the electronic control unit 3.

**.** The dissipative braking torque actuation module 8 is configured to be operatively connected to the at least one first axle F-A.

**.** In an embodiment, in combination with the preceding one, the electronic control unit 3 is configured to divide the target braking or driving value TG to be imparted to the at least one first axle F-A into the first regenerative braking or driving torque target RG-1 to be imparted to the at least one first axle F-A by means of the at least one first electric motor M1, and into a first dissipative braking torque target FD-1 to be imparted to the first front axle F-A by means of the dissipative braking torque actuation module 8.

**.** In an embodiment, in combination with the preceding one when in combination with that in which the electronic control unit 3 comprises the first braking or driving torque division management sub-module 7, the division of the target braking or driving value TG to be imparted to the at least one first axle F-A in the at least one first regenerative braking or driving torque target RG-1 and into the first dissipative braking torque target FD-1 is carried out by the first braking or driving torque division management sub-module 7.

**.** In an embodiment, in combination with the preceding one and in which the vehicle 1 comprises the at least one second axle R-A and the braking/driving system 2 of the vehicle 1 comprises the at least one second electric motor M2, the dissipative braking torque actuation module 8 is configured to be operatively connected to the at least one first axle F-A and/or the at least one second axle R-A.

**.** In this embodiment, the electronic control unit 3 is further configured to divide the second braking or driving component TG-2 to be imparted to the at least one second axle R-A into the at least one second regenerative braking or driving torque target RG-2 to be imparted to the at least one second axle R-A by means of the at least one second electric motor M2 and into a second dissipative braking torque target FD-2 to be imparted to the at least one second axle R-A by means of the dissipative braking torque actuation module 8.

**.** It should be noted that the type of first dissipative braking torque target FD-1 and second dissipative braking torque target FD1, when present, depends on the type of dissipative braking torque actuation module 8, as described below according to various embodiments.

**.** In an embodiment, in combination with the preceding one when the electronic control unit 3 comprises the first braking torque division management sub-module 7, the division of the second braking or driving component TG-2 to be imparted to the at least one second axle R-A in the at least one second regenerative braking or driving torque target RG-2 to be imparted to the at least one second axle R-A by means of the at least one second electric motor M2 and into the at least one second dissipative braking torque target FD-2 to be imparted to the at least one second axle R-A by means of the dissipative braking torque actuation module 8 is carried out by the first braking torque division management sub-module 7.

**.** In an embodiment, in combination with any of the preceding ones in which the dissipative braking torque actuation module 8 is provided, the dissipative braking torque actuation module 8 comprises one or more braking modules with B-b-W technology.

**.** Therefore, the dissipative braking torque actuation module 8 (diagrammatically shown as a single block in the figures) comprises at least one brake pump, at least one electromechanical or electrohydraulic actuator, at least one brake assembly (i.e., the brake caliper, brake disc, pad(s) assembly), at least one hydraulic pipe assembly for connecting the aforesaid components to one another. In this embodiment, the dissipative braking torque actuation module 8 is therefore configured to dissipate the braking energy into heat, which is not recovered as in the case of a generator.

**.** In this embodiment, the type of the first dissipative braking torque target FD-1 and the second dissipative braking torque target FD1, when present, is a value of electric current/braking torque.

**.** In an embodiment, in combination with any of the preceding ones in which there is the dissipative braking torque actuation module 8, in addition to providing instructions I-C for conveying a first electric power flow FP-1 entering in the first battery pack 5 of high-energy cells, a second electric power flow FP-2 leaving the first battery pack 5 of high-energy cells, a third electric power flow FP-3 entering in the second battery pack 6 of high-power cells, and a fourth electric power flow FP-4 leaving the second battery pack 6 of high-power cells, and controlling the first electric power flow FP-1, the second electric power flow FP-2, the third electric power flow FP-3, and the fourth electric power flow FP-4, the power management unit 4 is configured to provide further instructions UI-C for conveying a respective fifth electric power flow FP-5 entering in the dissipative braking torque actuation module 8 by means of the electronic control unit 3, and optionally control the fifth electric power flow FP-5 based on said first input information I1, the at least one second input information I2, said third input information I3, and the further input information I4.

**.** In a further embodiment, as an alternative to the preceding one, the dissipative braking torque actuation module 8 comprises one or more parasitic electric current brakes configured to be operatively connected to the at least one first axle F-A and/or to the at least one second axle R-A (when present) and/or to said at least one first wheel W-A1 and/or said at least one second wheel W-A2 (when present) and/or the further first wheel W-R1 (when present) and/or the further second wheel W-R2 (when present).

**.** The parasitic electric current brake is a magnetic brake which action decelerates the vehicle 1, generating parasitic electric currents by electromagnetic induction. The parasitic current brake is a dissipative brake in which the dissipation of energy is not due to contact between the braking components (as occurs, for example, in a braking module with B-b-W technology), rather to the transformation into heat of the induced braking electric currents. Therefore, also in this case, as in a conventional hydraulic brake, the braking energy is dissipated into heat and is not recovered, as in the case of a generator.

**.** Therefore, advantageously, the system 100 according to this embodiment is not subject to wear.

**.** In this embodiment, the type of first dissipative braking torque target FD-1 and the second dissipative braking torque target FD1, when present, is a pressure value of the braking fluid.

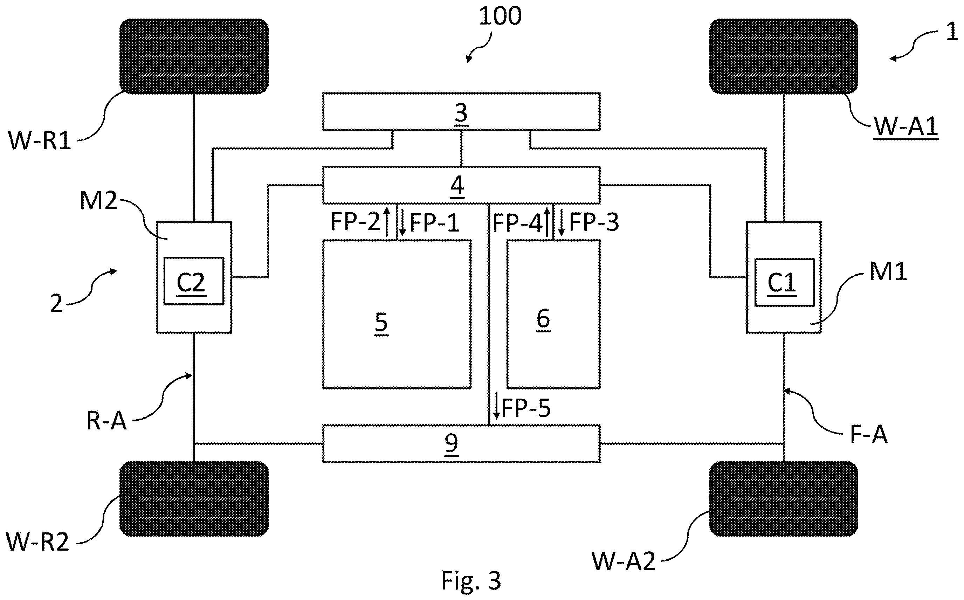

**.** According to a further embodiment, as an alternative to the preceding ones and shown in Figure 3, the system 100 further comprises a dissipation module 9 operatively connected to the power management unit 4.

**.** The dissipation module 9 is configured to be operatively connected to the at least one first axle F-A.

**.** In this embodiment, in addition to providing instructions I-C for conveying a first electric power flow FP-1 entering in the first battery pack 5 of high-energy cells, a second electric power flow FP-2 leaving the first battery pack 5 of high-energy cells, a third electric power flow FP-3 entering in the second battery pack 6 of high-power cells, and a fourth electric power flow FP-4 leaving the second battery pack 6 of high-power cells, and controlling the first electric power flow FP-1, the second electric power flow FP-2, the third electric power flow FP-3, and the fourth electric power flow FP-4, the power management unit 4 is configured to provide further instructions UI-C for conveying a respective fifth electric power flow FP-5 entering in the dissipation module 9 and a respective sixth electric power flow FP-6 leaving the dissipation module 9 and, optionally, control the fifth electric power flow FP-5 based on said first input information I1, the at least one second input information I2, said third input information I3 and the further input information I4.

**.** Due to the electrical resistivity thereof, the dissipation module 9, for example a resistor, crossed by an electric power, therefore by an electric current, is capable of dissipating energy into heat due to the Joule effect.

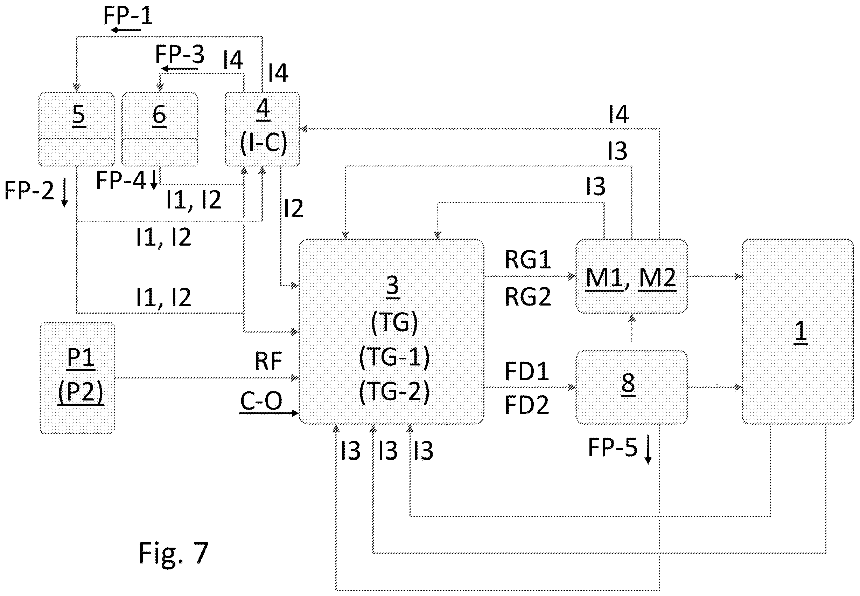

**.** With reference to the more general embodiment shown in Figure 1, in which the vehicle 1 comprises at least one first axle F-A and the braking/driving system 2 of the vehicle 1 comprises the at least one first electric motor M1, and in which the system 100 does not have a dissipative braking torque actuation module or a dissipation module, and also referring in particular to the diagram in Figure 7, an operating example of the system 100 for managing the electric power flow in battery packs of an electric or hybrid vehicle 1 is now described.

**.** An electronic control unit 3 of the system 100 for managing the electric power flow in battery packs of an electric or hybrid vehicle receives a braking request RF imparted, for example, by a driver P1 by means of a brake pedal of the vehicle 1.

**.** The electronic control unit 3 receives the at least one piece of information C-O representative of an operating condition of the vehicle 1, for example, information concerning a deceleration of the vehicle 1.

**.** Then the electronic control unit 3 receives first input information I1 representative of a condition of correct operation ("state of health") of a first battery pack 5 of high-energy cells and a second battery pack 6 of high-power cells of the system 100.

**.** The first input information I1 was defined and described above.

**.** The electronic control unit 3 receives at least one second information I2 representative of an electric power regenerated inside the system 100.

**.** The at least one second input information I2 is provided by a power management unit 4 of the system 100 operatively connected to the electronic control unit 3.

**.** The electronic control unit 3 receives third input information I3 representative of a regenerative braking or driving phase carried out by the system 100 on the braking/driving system 2 of the vehicle 1.

**.** The third input information I3 was defined and described above.

**.** The power management unit 4 of the system 100 receives a further input information I4 representative of an electric power regenerated by the at least one first electric motor M1.

**.** The electronic control unit 3 determines a target braking or driving value TG to be imparted to the vehicle 1, based on said braking request RF and, when present, on the at least one piece of information C-O representative of an operating condition of the vehicle 1.

**.** The determined target braking or driving value TG to be imparted to the vehicle 1 comprises at least one first regenerative braking or driving torque target RG-1 of the at least one first axle F-A.

**.** The electronic control unit 3 defines the at least one first regenerative braking or driving torque target RG-1 to be imparted to the at least one first electric motor M1 operatively connected to the at least one first axle F-A of the vehicle 1 based on said first input information I1, the at least one second input information I2, and said third input information I3.

**.** The power management unit 4 provides instructions I-C for conveying a first electric power flow FP-1 entering in the first battery pack 5 of high-energy cells, a second electric power flow FP-2 leaving the first battery pack 5 of high-energy cells, a third electric power flow FP-3 entering in the second battery pack 6 of high-power cells, and a fourth electric power flow FP-4 leaving the second battery pack 6 of high-power cells.

**.** The power management unit 4 controls the first electric power flow FP-1, the second electric power flow FP-2, the third electric power flow FP-3, and the fourth electric power flow FP-4 based on said first input information I1, the at least one second input information I2, said third input information I3, and the further input information I4.

**.** Therefore, based on the state of health and charge of the first battery pack 5 and the second battery pack 6 and based on the current braking condition, the power management unit 4 is capable of delivering the electric power from/to the first battery pack 5 of high-energy cells or from/to the second battery pack 6 of high power cells.

**.** The control of the flows leaving the first battery pack 5 of high-energy cells and the second battery pack 6 of high-power cells is important for controlling the driving phase of the vehicle 1.

**.** As can be seen, the object of the present invention is fully achieved.

**.** Indeed, the system and method of the present invention allow recovering all the braking power, thus maximizing the range of use of the vehicle and minimizing the pollution from fine dust due to the use of the friction brake without incurring an oversizing of the first battery pack 5 of high-energy cells.

**.** The proposed system comprises one or more electric motors connected to one or more wheels or front or rear axles of the vehicle.

**.** Based on the regenerative braking or driving torque targets received from an electronic control unit of the vehicle (VCU), each electric motor control module controls the driving torque and/or braking torque of the vehicle, for example, by conveniently regulating the supply voltage of the respective electric motor.

**.** The second battery pack 6 of high-power cells allows absorbing the braking power peaks that the high-energy battery back is not capable of accepting.

**.** During the driving phase, the second battery pack 6 of high-power cells instead transfers electricity to the first battery pack 5 of high-energy cells while respecting the maximum current limits that the latter are capable of absorbing, or they transfer energy directly to the electric motors, supporting the first high-energy battery pack during the driving phase.

**.** The electronic control unit is configured to process the braking or driving request imparted by the driver by reading a pump pressure signal and/or pedal stroke, transform it into a braking torque target for front axle and rear axle and, according to the state of charge and the state of the batteries, conveniently distribute a braking or driving torque request to the electric motors, as a regenerative braking or driving torque, and to the possible dissipation module, as a dissipative braking torque.

## Claims

1. A system (100) for managing the electric power flow in battery packs of an electric or hybrid vehicle (1), comprising:
- an electronic control unit (3) of the vehicle (1), the electronic control unit (3) being configured to be operatively connected to at least one first electric motor (M1) of a braking/driving system (2) of the vehicle (1) operatively connected to at least one first axle (F-A) of the vehicle (1), the electronic control unit (3) being configured to control the at least one first electric motor (M1);
- a power management unit (4), distinct from and directly connected to the electronic control unit (3), the power management unit (4) being configured to be operatively connected to the at least one first electric motor (M1);
- a first battery pack (5) of high-energy cells operatively connected to the power management unit (4), the first battery pack (5) of high-energy cells being configured to store electricity during a braking phase of the vehicle (1) to be supplied to the at least one first electric motor (M1) during a driving phase of the vehicle (1);
- a second battery pack (6) of high-power cells operatively connected to the power management unit (4), the second battery pack (6) of high-power cells being configured to store electricity from electric power peaks of regenerative braking;
the electronic control unit (3) being configured to:
- receive a braking or driving request (RF);
- receive first input information (11) representative of a condition of correct operation of the first battery pack (5) of high-energy cells and the second battery pack (6) of high-power cells;
- receive at least one second input information (I2) representative of an electric power regenerated inside the system (100), the at least one second input information (I2) being provided by the power management unit (4), distinct from and directly connected to the electronic control unit (3);
- receive third input information (I3) representative of a regenerative braking or driving phase carried out by the system (100) on the braking/driving system (2);
- determine a target braking or driving value (TG) to be imparted to the vehicle (1) based on said braking or driving request (RF), the determined target braking or driving value (TG) to be imparted to the vehicle (1) comprising at least one first regenerative braking or driving torque target (RG-1) to be imparted to the at least one first axle (F-A);
- define the at least one first regenerative braking or driving torque target (RG-1) to be imparted to the at least one first electric motor (M1) operatively connected to the at least one first axle (F-A) based on said first input information (11), the at least one second input information (I2), and said third input information (I3);
the power management unit (4), distinct from and directly connected to the electronic control unit (3), being configured to:
- receive directly from the at least one first electric motor (M1) a further input information (I4) representative of an electric power regenerated by the at least one first electric motor (M1);
- provide instructions (I-C) for conveying a first electric power flow (FP-1) entering in the first battery pack (5) of high-energy cells, a second electric power flow (FP-2) leaving the first battery pack (5) of high-energy cells, a third electric power flow (FP-3) entering in the second battery pack (6) of high-power cells, and a fourth electric power flow (FP-4) leaving the second battery pack (6) of high-power cells, and control the first electric power flow (FP-1), the second electric power flow (FP-2), the third electric power flow (FP-3), and the fourth electric power flow (FP-4) based on said first input information (11), the at least one second input information (I2), said third input information (I3), and the further input information (I4).

2. The system (100) according to claim 1, wherein the electronic control unit (3) is configured to receive at least one piece of information (C-O) representative of an operating condition of the vehicle (1), the electronic control unit (3) being configured to determine the target braking or driving value (TG) to be imparted to the vehicle (1), comprising at least one first regenerative braking or driving torque target (RG-1) to be imparted to the at least one first axle (F-A), based on said braking or driving request (RF) and the at least one piece of information (C-O) representative of an operating condition of the vehicle (1).

3. The system (100) according to any one of the preceding claims, wherein the electronic control unit (3) comprises a first braking or driving torque division management sub-module (7), the first braking or driving torque division management sub-module (7) being configured to define the at least one first regenerative braking torque target (RG-1) from the target braking or driving value (TG) to be imparted to the at least one first axle (F-A).

4. The system (100) according to any one of the preceding claims, further comprising a dissipative braking torque actuation module (8) operatively connected to the electronic control unit (3), the dissipative braking torque actuation module (8) being configured to be operatively connected to the at least one first axle (F-A), the electronic control unit (3) being configured to divide the target braking or driving value (TG) to be imparted to the at least one first axle (F-A) into the first regenerative braking or driving torque target (RG-1) to be imparted to the at least one first axle (F-A) by means of the at least one first electric motor (M1), and into a first dissipative braking torque target (FD-1) to be imparted to the first front axle (F-A) by means of the dissipative braking torque actuation module (8).

5. The system (100) according to claim 4 when dependent on claim 3, wherein the division of the target braking or driving value (TG) to be imparted to the at least one first axle (F-A) into the at least one first regenerative braking or driving torque target (RG-1) and into the first dissipative braking torque target (FD-1) is performed by the first braking torque division management sub-module (7).

6. The system (100) according to either one of preceding claims 4 or 5, wherein the dissipative braking torque actuation module (8) comprises one or more braking modules with B-b-W technology.

7. The system (100) according to either one of preceding claims 4 or 5, wherein the dissipative braking torque actuation module (8) comprises a braking module with B-b-W technology or one or more parasitic electric current brakes configured to be operatively connected to the at least one first axle (F-A) and/or at least one first wheel (W-A1).

8. The system (100) according to any one of preceding claims 4 to 7, wherein the power management unit (4) is configured to provide further instructions (UI-C) for conveying a respective fifth electric power flow (FP-5) entering in the dissipative braking torque actuation module (8) by means of the electronic control unit (3), and optionally control the fifth electric power flow (FP-5) based on said first input information (11), the at least one second input information (I2), said third input information (I3), and the further input information (I4).

9. The system (100) according to any one of preceding claims 1 to 3, further comprising a dissipation module (9) operatively connected to the power management unit (4), the dissipation module (9) being configured to be operatively connected to the at least one first axle (F-A), the power management unit (4) being configured to provide further instructions (UI-C) for conveying a respective fifth electric power flow (FP-5) entering in the dissipation module (9), and optionally control the fifth electric power flow (FP-5) based on said first input information (11), the at least one second input information (I2), said third input information (I3), and the further input information (I4).

## Patentansprüche

1. System (100) zur Steuerung des elektrischen Leistungsflusses in Batteriepaketen eines Elektro- oder Hybridfahrzeugs (1), umfassend:
- eine elektronische Steuereinheit (3) des Fahrzeugs (1), wobei die elektronische Steuereinheit (3) dazu konfiguriert ist, operativ mit mindestens einem ersten Elektromotor (M1) eines Brems-/Antriebssystems (2) des Fahrzeugs (1) verbunden zu sein, das operativ mit mindestens einer ersten Achse (F-A) des Fahrzeugs (1) verbunden ist, wobei die elektronische Steuereinheit (3) dazu konfiguriert ist, den mindestens einen ersten Elektromotor (M1) zu steuern;
- eine Leistungsverwaltungseinheit (4), die von der elektronischen Steuereinheit (3) getrennt und direkt mit dieser verbunden ist, wobei die Leistungsverwaltungseinheit (4) dazu konfiguriert ist, operativ mit dem mindestens einen ersten Elektromotor (M1) verbunden zu sein;
- ein erstes Batteriepaket (5) aus Hochenergiezellen, das operativ mit der Leistungsverwaltungseinheit (4) verbunden ist, wobei das erste Batteriepaket (5) aus Hochenergiezellen dazu konfiguriert ist, während einer Bremsphase des Fahrzeugs (1) Strom zu speichern, der dem mindestens einen ersten Elektromotor (M1) während einer Antriebsphase des Fahrzeugs (1) zuzuführen ist;
- ein zweites Batteriepaket (6) aus Hochleistungszellen, das operativ mit der Leistungsverwaltungseinheit (4) verbunden ist, wobei das zweite Batteriepaket (6) aus Hochleistungszellen dazu konfiguriert ist, Strom aus elektrischen Leistungsspitzen des regenerativen Bremsens zu speichern;
wobei die elektronische Steuereinheit (3) konfiguriert ist zum:
- Empfangen einer Brems- oder Antriebsanforderung (RF);
- Empfangen erster Eingangsinformationen (I1), die repräsentativ für einen Zustand des ordnungsgemäßen Betriebs des ersten Batteriepakets (5) aus Hochenergiezellen und des zweiten Batteriepakets (6) aus Hochleistungszellen sind;
- Empfangen mindestens einer zweiten Eingangsinformation (I2), die repräsentativ für eine innerhalb des Systems (100) regenerierte elektrische Leistung ist, wobei die mindestens eine zweite Eingangsinformation (I2) von der Leistungsverwaltungseinheit (4) bereitgestellt wird, die von der elektronischen Steuereinheit (3) getrennt und direkt mit dieser verbunden ist;
- Empfangen dritter Eingangsinformationen (I3), die repräsentativ für eine regenerative Brems- oder Antriebsphase sind, die durch das System (100) am Brems/Antriebssystem (2) ausgeführt wird;
- Bestimmen eines an das Fahrzeug (1) abzugebenden Soll-Brems- oder -Antriebswerts (TG) basierend auf der Bremsoder Antriebsanforderung (RF), wobei der bestimmte an das Fahrzeug (1) abzugebende Soll-Brems- oder -Antriebswert (TG) mindestens einen ersten regenerativen Brems- oder Antriebsdrehmomentsollwert (RG-1) umfasst, der an die mindestens eine erste Achse (F-A) abzugeben ist;
- Definieren des mindestens einen ersten regenerativen Brems- oder Antriebsdrehmomentsollwerts (RG-1), der an den mindestens einen ersten Elektromotor (M1) abzugeben ist, der operativ mit der mindestens einen ersten Achse (F-A) verbunden ist, basierend auf den ersten Eingangsinformationen (I1), der mindestens einen zweiten Eingangsinformation (I2) und den dritten Eingangsinformationen (I3);
wobei die Leistungsverwaltungseinheit (4), die von der elektronischen Steuereinheit (3) getrennt und direkt mit dieser verbunden ist, konfiguriert ist zum:
- direkten Empfangen einer weiteren Eingangsinformation (I4) von dem mindestens einen ersten Elektromotor (M1), die repräsentativ für eine durch den mindestens einen ersten Elektromotor (M1) regenerierte elektrische Leistung ist;
- Bereitstellen von Anweisungen (I-C) zum Leiten eines ersten elektrischen Leistungsflusses (FP-1), der in das erste Batteriepaket (5) aus Hochenergiezellen eintritt, eines zweiten elektrischen Leistungsflusses (FP-2), der das erste Batteriepaket (5) aus Hochenergiezellen verlässt, eines dritten elektrischen Leistungsflusses (FP-3), der in das zweite Batteriepaket (6) aus Hochleistungszellen eintritt, und eines vierten elektrischen Leistungsflusses (FP-4), der das zweite Batteriepaket (6) aus Hochleistungszellen verlässt, und zum Steuern des ersten elektrischen Leistungsflusses (FP-1), des zweiten elektrischen Leistungsflusses (FP-2), des dritten elektrischen Leistungsflusses (FP-3) und des vierten elektrischen Leistungsflusses (FP-4) basierend auf den ersten Eingangsinformationen (I1), der mindestens einen zweiten Eingangsinformation (I2), den dritten Eingangsinformationen (I3) und der weiteren Eingangsinformation (I4).

2. System (100) nach Anspruch 1, wobei die elektronische Steuereinheit (3) dazu konfiguriert ist, mindestens eine Information (C-O) zu empfangen, die repräsentativ für einen Betriebszustand des Fahrzeugs (1) ist, wobei die elektronische Steuereinheit (3) dazu konfiguriert ist, den an das Fahrzeug (1) abzugebenden Soll-Brems- oder - Antriebswert (TG), der mindestens einen ersten regenerativen Brems- oder Antriebsdrehmomentsollwert (RG-1) umfasst, der an die mindestens eine erste Achse (F-A) abzugeben ist, basierend auf der Brems- oder Antriebsanforderung (RF) und der mindestens einen Information (C-O), die repräsentativ für einen Betriebszustand des Fahrzeugs (1) ist, zu bestimmen.

3. System (100) nach einem der vorhergehenden Ansprüche, wobei die elektronische Steuereinheit (3) ein erstes Bremsoder Antriebsdrehmomentaufteilungsverwaltungs-Untermodul (7) umfasst, wobei das erste Brems- oder Antriebsdrehmomentaufteilungsverwaltungs-Untermodul (7) dazu konfiguriert ist, den mindestens einen ersten regenerativen Bremsdrehmomentsollwert (RG-1) aus dem an die mindestens eine erste Achse (F-A) abzugebenden Soll-Bremsoder -Antriebswert (TG) zu definieren.

4. System (100) nach einem der vorhergehenden Ansprüche, ferner umfassend ein Betätigungsmodul (8) für dissipatives Bremsdrehmoment, das operativ mit der elektronischen Steuereinheit (3) verbunden ist, wobei das Betätigungsmodul (8) für dissipatives Bremsdrehmoment dazu konfiguriert ist, operativ mit der mindestens einen ersten Achse (F-A) verbunden zu sein, wobei die elektronische Steuereinheit (3) dazu konfiguriert ist, den an die mindestens eine erste Achse (F-A) abzugebenden Soll-Brems- oder -Antriebswert (TG) in den ersten regenerativen Brems- oder Antriebsdrehmomentsollwert (RG-1), der mittels des mindestens einen ersten Elektromotors (M1) an die mindestens eine erste Achse (F-A) abzugeben ist, und in einen ersten dissipativen Bremsdrehmomentsollwert (FD-1), der mittels des Betätigungsmoduls (8) für dissipatives Bremsdrehmoment an die erste Vorderachse (F-A) abzugeben ist, aufzuteilen.

5. System (100) nach Anspruch 4, wenn abhängig von Anspruch 3, wobei die Aufteilung des an die mindestens eine erste Achse (F-A) abzugebenden Soll-Brems- oder - Antriebswerts (TG) in den mindestens einen ersten regenerativen Brems- oder Antriebsdrehmomentsollwert (RG-1) und in den ersten dissipativen Bremsdrehmomentsollwert (FD-1) durch das erste Bremsdrehmomentaufteilungsverwaltungs-Untermodul (7) durchgeführt wird.

6. System (100) nach einem der vorhergehenden Ansprüche 4 oder 5, wobei das Betätigungsmodul (8) für dissipatives Bremsdrehmoment ein oder mehrere Bremsmodule mit B-b-W-Technologie umfasst.

7. System (100) nach einem der vorhergehenden Ansprüche 4 oder 5, wobei das Betätigungsmodul (8) für dissipatives Bremsdrehmoment ein Bremsmodul mit B-b-W-Technologie oder eine oder mehrere parasitäre Wirbelstrombremsen umfasst, die dazu konfiguriert sind, operativ mit der mindestens einen ersten Achse (F-A) und/oder mindestens einem ersten Rad (W-A1) verbunden zu sein.

8. System (100) nach einem der vorhergehenden Ansprüche 4 bis 7, wobei die Leistungsverwaltungseinheit (4) dazu konfiguriert ist, weitere Anweisungen (Ul-C) zum Leiten eines jeweiligen fünften elektrischen Leistungsflusses (FP-5), der in das Betätigungsmodul (8) für dissipatives Bremsdrehmoment eintritt, mittels der elektronischen Steuereinheit (3) bereitzustellen und optional den fünften elektrischen Leistungsfluss (FP-5) basierend auf den ersten Eingangsinformationen (I1), der mindestens einen zweiten Eingangsinformation (I2), den dritten Eingangsinformationen (I3) und der weiteren Eingangsinformation (I4) zu steuern.

9. System (100) nach einem der vorhergehenden Ansprüche 1 bis 3, ferner umfassend ein Dissipationsmodul (9), das operativ mit der Leistungsverwaltungseinheit (4) verbunden ist, wobei das Dissipationsmodul (9) dazu konfiguriert ist, operativ mit der mindestens einen ersten Achse (F-A) verbunden zu sein, wobei die Leistungsverwaltungseinheit (4) dazu konfiguriert ist, weitere Anweisungen (Ul-C) zum Leiten eines jeweiligen fünften elektrischen Leistungsflusses (FP-5), der in das Dissipationsmodul (9) eintritt, bereitzustellen und optional den fünften elektrischen Leistungsfluss (FP-5) basierend auf den ersten Eingangsinformationen (I1), der mindestens einen zweiten Eingangsinformation (I2), den dritten Eingangsinformationen (I3) und der weiteren Eingangsinformation (I4) zu steuern.

## Revendications

1. Système (100) de gestion du flux d'énergie électrique dans des blocs de batteries d'un véhicule électrique ou hybride (1), comprenant :
- une unité de commande électronique (3) du véhicule (1), l'unité de commande électronique (3) étant configurée pour être reliée de manière opérationnelle à au moins un premier moteur électrique (M1) d'un système de freinage/traction (2) du véhicule (1) relié de manière opérationnelle à au moins un premier essieu (F-A) du véhicule (1), l'unité de commande électronique (3) étant configurée pour commander l'au moins un premier moteur électrique (M1) ;
une unité de gestion de l'énergie (4), distincte de l'unité de commande électronique (3) et directement reliée à celle-ci, l'unité de gestion de l'énergie (4) étant configurée pour être reliée de manière opérationnelle à l'au moins un premier moteur électrique (M1) ;
un premier bloc de batteries (5) de cellules à haute énergie relié de manière opérationnelle à l'unité de gestion de l'énergie (4), le premier bloc de batteries (5) de cellules à haute énergie étant configuré pour stocker de l'électricité pendant une phase de freinage du véhicule (1) pour être fournie à l'au moins un premier moteur électrique (M1) pendant une phase de traction du véhicule (1) ;
un deuxième bloc de batteries (6) de cellules à haute puissance relié de manière opérationnelle à l'unité de gestion de l'énergie (4), le deuxième bloc de batteries (6) de cellules à haute puissance étant configuré pour stocker de l'électricité provenant de pics de puissance électrique de freinage régénératif ;
l'unité de commande électronique (3) étant configurée pour :
recevoir une demande de freinage ou de traction (RF) ; recevoir des premières informations d'entrée (I1) représentatives d'une condition de bon fonctionnement du premier bloc de batteries (5) de cellules à haute énergie et du deuxième bloc de batteries (6) de cellules à haute puissance ;
recevoir au moins une deuxième information d'entrée (I2) représentative d'une puissance électrique régénérée à l'intérieur du système (100), l'au moins une deuxième information d'entrée (I2) étant fournie par l'unité de gestion de l'énergie (4), distincte de l'unité de commande électronique (3) et directement reliée à celle-ci ; recevoir des troisièmes informations d'entrée (I3) représentatives d'une phase de freinage régénératif ou de traction effectuée par le système (100) sur le système de freinage/traction (2) ;
déterminer une valeur cible de freinage ou de traction (TG) à appliquer au véhicule (1) sur la base de ladite demande de freinage ou de traction (RF), la valeur cible de freinage ou de traction (TG) déterminée à appliquer au véhicule (1) comprenant au moins une première cible de couple de freinage régénératif ou de traction (RG-1) à appliquer à l'au moins un premier essieu (F-A) ;
définir l'au moins une première cible de couple de freinage régénératif ou de traction (RG-1) à appliquer à l'au moins un premier moteur électrique (M1) relié de manière opérationnelle à l'au moins un premier essieu (F-A) sur la base desdites premières informations d'entrée (I1), de l'au moins une deuxième information d'entrée (I2), et desdites troisièmes informations d'entrée (I3) ;
l'unité de gestion de l'énergie (4), distincte de l'unité de commande électronique (3) et directement reliée à celle-ci, étant configurée pour :
recevoir directement de l'au moins un premier moteur électrique (M1) une information d'entrée supplémentaire (I4) représentative d'une puissance électrique régénérée par l'au moins un premier moteur électrique (M1) ;
fournir des instructions (I-C) pour acheminer un premier flux d'énergie électrique (FP-1) entrant dans le premier bloc de batteries (5) de cellules à haute énergie, un deuxième flux d'énergie électrique (FP-2) sortant du premier bloc de batteries (5) de cellules à haute énergie, un troisième flux d'énergie électrique (FP-3) entrant dans le deuxième bloc de batteries (6) de cellules à haute puissance, et un quatrième flux d'énergie électrique (FP-4) sortant du deuxième bloc de batteries (6) de cellules à haute puissance, et commander le premier flux d'énergie électrique (FP-1), le deuxième flux d'énergie électrique (FP-2), le troisième flux d'énergie électrique (FP-3) et le quatrième flux d'énergie électrique (FP-4) sur la base des dures premières informations d'entrée (I1), de l'au moins une deuxième information d'entrée (I2), desdites troisièmes informations d'entrée (I3) et de l'information d'entrée supplémentaire (I4).

2. Système (100) selon la revendication 1, dans lequel l'unité de commande électronique (3) est configurée pour recevoir au moins une information (C-O) représentative d'une condition de fonctionnement du véhicule (1), l'unité de commande électronique (3) étant configurée pour déterminer la valeur cible de freinage ou de traction (TG) à appliquer au véhicule (1), comprenant au moins une première cible de couple de freinage régénératif ou de traction (RG-1) à appliquer à l'au moins un premier essieu (F-A), sur la base de ladite demande de freinage ou de traction (RF) et de l'au moins une information (C-O) représentative d'une condition de fonctionnement du véhicule (1).

3. Système (100) selon l'une quelconque des revendications précédentes, dans lequel l'unité de commande électronique (3) comprend un premier sous-module de gestion de répartition de couple de freinage ou de traction (7), le premier sous-module de gestion de répartition de couple de freinage ou de traction (7) étant configuré pour définir l'au moins une première cible de couple de freinage régénératif (RG-1) à partir de la valeur cible de freinage ou de traction (TG) à appliquer à l'au moins un premier essieu (F-A).

4. Système (100) selon l'une quelconque des revendications précédentes, comprenant en outre un module d'actionnement de couple de freinage dissipatif (8) relié de manière opérationnelle à l'unité de commande électronique (3), le module d'actionnement de couple de freinage dissipatif (8) étant configuré pour être relié de manière opérationnelle à l'au moins un premier essieu (FA), l'unité de commande électronique (3) étant configurée pour répartir la valeur cible de freinage ou de traction (TG) à appliquer à l'au moins un premier essieu (F-A) en la première cible de couple de freinage régénératif ou de traction (RG-1) à appliquer à l'au moins un premier essieu (F-A) au moyen de l'au moins un premier moteur électrique (M1), et en une première cible de couple de freinage dissipatif (FD-1) à appliquer au premier essieu avant (F-A) au moyen du module d'actionnement de couple de freinage dissipatif (8).

5. Système (100) selon la revendication 4 lorsqu'elle dépend de la revendication 3, dans lequel la répartition de la valeur cible de freinage ou de traction (TG) à appliquer à l'au moins un premier essieu (F-A) en l'au moins une première cible de couple de freinage régénératif ou de traction (RG-1) et en la première cible de couple de freinage dissipatif (FD-1) est effectuée par le premier sous-module de gestion de répartition de couple de freinage (7).

6. Système (100) selon l'une ou l'autre des revendications précédentes 4 ou 5, dans lequel le module d'actionnement de couple de freinage dissipatif (8) comprend un ou plusieurs modules de freinage dotés de la technologie B-b-W.

7. Système (100) selon l'une ou l'autre des revendications précédentes 4 ou 5, dans lequel le module d'actionnement de couple de freinage dissipatif (8) comprend un module de freinage doté de la technologie B-b-W ou un ou plusieurs freins à courant électrique parasite configurés pour être reliés de manière opérationnelle à l'au moins un premier essieu (F-A) et/ou à au moins une première roue (W-A1).

8. Système (100) selon l'une quelconque des revendications précédentes 4 à 7, dans lequel l'unité de gestion de l'énergie (4) est configurée pour fournir des instructions supplémentaires (Ul-C) pour acheminer un cinquième flux d'énergie électrique (FP-5) respectif entrant dans le module d'actionnement de couple de freinage dissipatif (8) au moyen de l'unité de commande électronique (3), et facultativement commander le cinquième flux d'énergie électrique (FP-5) sur la base desdites premières informations d'entrée (I1), de l'au moins une deuxième information d'entrée (I2), desdites troisièmes informations d'entrée (I3) et de l'information d'entrée supplémentaire (I4).

9. Système (100) selon l'une quelconque des revendications précédentes 1 à 3, comprenant en outre un module de dissipation (9) relié de manière opérationnelle à l'unité de gestion de l'énergie (4), le module de dissipation (9) étant configuré pour être relié de manière opérationnelle à l'au moins un premier essieu (F-A), l'unité de gestion de l'énergie (4) étant configurée pour fournir des instructions supplémentaires (Ul-C) pour acheminer un cinquième flux d'énergie électrique (FP-5) respectif entrant dans le module de dissipation (9), et facultativement commander le cinquième flux d'énergie électrique (FP-5) sur la base desdites premières informations d'entrée (I1), de l'au moins une deuxième information d'entrée (I2), desdites troisièmes informations d'entrée (I3) et de l'information d'entrée supplémentaire (I4).
